# FASCICULE DE BREVET EUROPEEN

(11) **EP 0 625 452 B1**
(45) Date de publication et mention de la délivrance du brevet: **19.11.1997**
(21) Numéro de dépôt: 94107181.3
(22) Date de dépôt: 07.05.1994
(51) Int. Cl.: B60S 1/38

(54) **Lame d'essuie-glace à deux pièces coextrudées et balai d'essuie-glace équipé d'une telle lame**
Scheibenwischerblatt mit zwei koextrudierten Stücken und mit derartigem Blatt ausgerüsteter Scheibenwischer
Windscreen wiper blade in two coextruded pieces and windscreen wiper equiped with such a blade

(30) Priorité: 17.05.1993 FR 9305927
(43) Date de publication de la demande: 23.11.1994
(73) Titulaire: VALEO SYSTEMES D'ESSUYAGE, 78180 Montigny-Le-Bretonneux (FR)
(72) Inventeur: Mege, Bernard, F-63000 Clermont Ferrand (FR); Sortais, Jean-Luc, F-63110 Beaumont (FR)
(74) Mandataire: Gamonal, Didier

(56) Documents cités:
- EP-A- 0 437 806
- WO-A-91/11349
- DE-A- 3 337 815
- DE-A- 3 440 677
- FR-A- 1 306 952
- FR-A- 2 142 477
- FR-A- 2 248 962
- US-A- 3 116 510
- US-A- 4 669 144

## Description

La présente invention concerne une lame d'essuie-glace constituée par une partie dorsale destinée à la liaison mécanique avec la monture porteuse d'un balai d'essuie-glace et une lèvre racleuse mobile. La partie dorsale et la lèvre racleuse sont reliées par une charnière permettant un débattement de la lame racleuse par rapport à une position médiane.

Le brevet français FR-A-1 306 952 décrit différents modes de réalisation de telles lames d'essuie-glace.

La charnière est formée par une zone longitudinale fine disposée entre la partie dorsale et la lame racleuse. Cette charnière est soumise à des contraintes importantes et constitue le point fragile du balai. Elle est réalisée en un matériau dont les caractéristiques sont déterminées en priorité au regard de la capacité à suivre le galbe du parebrise et d'assurer la fonction principale de raclage de l'eau tout en autorisant un basculement aisé de la lèvre racleuse. Les qualités de résistance mécanique de la zone fine ne peuvent de ce fait pas être optimisées.

Le but de l'invention est de remédier à cet inconvénient en proposant une lame d'essuie-glace présentant à la fois une efficacité optimale en ce qui concerne le raclage de l'eau et le suivi du galbe du pare-brise, et une résistance à la déchirure de la charnière améliorée.

A cet effet, l'invention concerne plus particulièrement une lame d'essuie-glace comportant une partie dorsale et une lèvre racleuse reliées par une charnière permettant un débattement de la lèvre racleuse par rapport à une position médiane, la lame étant constituée d'au moins deux profilés assemblés (Lame divulguée dans FR-A-1 306 952), caractérisé en ce que l'un au moins des profilés présente un moyen de raccordement à une extrémité de la charnière et en ce que la charnière est réalisée en un matériau d'une dureté supérieure au matériau du premier profilé.

Selon un mode de réalisation de l'invention, l'autre des profilés présente des moyens de raccordement pour une extrémité de la charnière.

Selon un mode de réalisation de l'invention la charnière est réalisée sous la forme d'un troisième profilé coopérant avec les profilés.

Avantageusement, les profilés sont coextrudés.

Selon un mode de réalisation de l'invention les moyens de raccordement consistent en une rainure. La charnière présente, en section, une forme de I. Les rainures présentent, en section, une forme complémentaire à celle de l'extrémité de la charnière qu'il reçoit.

Un profilé présente une partie dorsale présentant une paire de rainures longitudinales et prolongée à son bord inférieur par une charnière.

Les profilés sont choisis parmi les suivants :
- 2 grades de santoprène coextrudés ;
- Premier profilé en santoprène dur et deuxième profilé en Vyram souple coextrudés ;
- Premier profilé en PA et deuxième profilé en Peba souple coextrudés ;
- Premier profilé en EPDM dur et deuxième profilé en EPDM souple coextrudés et covulcanisés en continu ;
- Premier profilé en Pebax dur et deuxième profilé en PVC-nitrile souple coextrudés et covulcanisés en continu.

L'invention sera mieux comprise à la lecture de la description qui suit, faisant référence aux dessins annexés où:
- la figure 1 représente une vue en coupe d'une lame selon un premier mode de réalisation ;
- la figure 2 représente une vue en coupe d'une lame selon un second mode de réalisation.

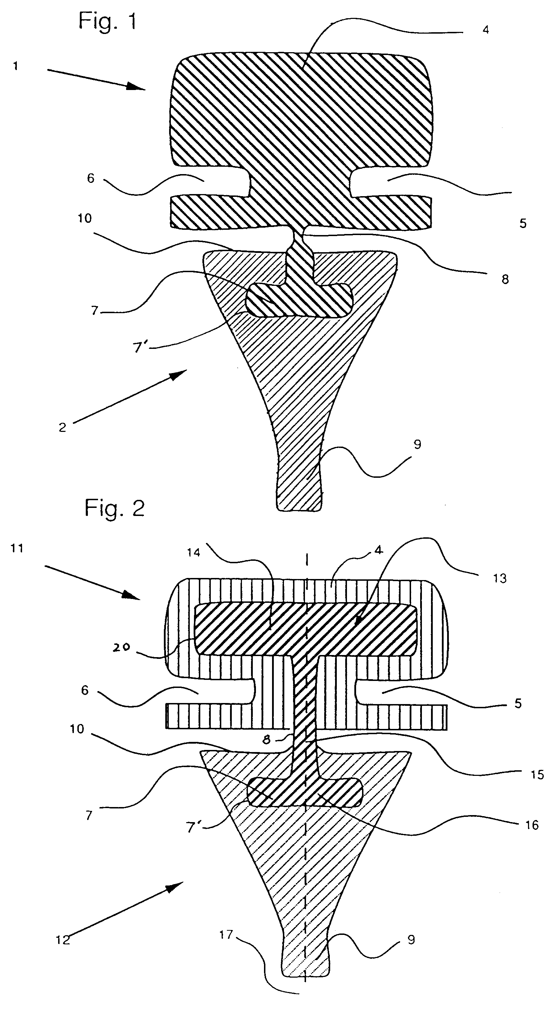

La figure 1 représente une vue en coupe d'une lame selon un premier mode de réalisation, comportant un premier profilé 1 relié à un second profilé 2.

Le premier profité comporte une partie dorsale 4 de section sensiblement rectangulaire, présentant deux rainures longitudinales latérales 5, 6 et une partie de liaison 7 dont la section est en forme de "T" inversé et dont la partie fine constitue la charnière 8.

Ce premier profilé est réalisé en un matériau de type élastomère, de préférence caoutchouteux de dureté et de module d'élasticité élevée, par exemple un copolymère d'éthylène-propylène-diene EPDM.

Le deuxième profilé 2 présente une partie de raclage 9 à son bord inférieur, et sur le bord opposé 10 une rainure longitudinale 7', constituant un moyen de raccordement avec la partie de liaison 7 formant la charnière 8, dont la section en "T" inversé est complémentaire de la partie de liaison 7 en forme de "T". Le deuxième profilé 2 est constitué en un matériau de dureté et de module d'élasticité inférieure à la dureté et au module d'élasticité du premier profilé.

Le premier profilé 1 et le deuxième profilé 2 sont coextrudés et covulcanisés.

A titre d'exemple, les couples de matières élastomères mises en oeuvre sont choisis parmi les suivants:
- 2 grades de santoprène (Marque commerciale) coextrudés ;
- Premier profilé en santoprène dur (Marque commerciale) et deuxième profilé en Vyram (Marque commerciale) souple coextrudés ;
- Premier profilé en PA et deuxième profilé en Peba (Marque commerciale) souple coextrudés ;
- Premier profilé en EPDM dur et deuxième profilé en EPDM souple coextrudés et covulcanisés ou coréticulés en continu par tout autre procédé en continu ;
- Premier profilé en Peba dur et deuxième profilé en PVC-nitrile souple thermoplastique coextrudés.

La figure 2 représente une variante comportant trois profilés complémentaires.

Le premier profilé 11 comporte une partie dorsale 4 de section rectangulaire, présentant deux rainures longitudinales latérales 5, 6 et une cavité centrale 20 s'ouvrant sur le bord inférieur.

Le deuxième profilé 12 présente une partie de raclage 9 à son bord inférieur, et sur le bord opposé 10 une rainure 7' en forme de "T" inversé.

Un troisième profilé 13, en section, présente une forme de I et réalisé en un matériau dur, est intercalé entre le premier profilé 11 et le deuxième profilé 12 pour constituer la charnière. Il présente une partie longitudinale supérieure 14 de section complémentaire à la section de la cavité 20 prévue dans le premier profitée 11, et une partie longitudinale inférieure 16 dont la section est complémentaire à celle de la rainure 7' du second profilé 12. Ces deux parties 14, 16 sont réunies par une zone de moindre épaisseur 15 permettant le basculement du deuxième profilé 12 par rapport au plan de symétrie médian 17.

Le troisième profilé est réalisé en thermoplastique flexible ou en thermoplastique extrudé dur.

Les trois profilés 11, 12, 13 sont avantageusement coextrudés.

L'invention est décrite dans ce qui précède à titre d'exemple non limitatif. L'Homme du Métier sera à même de proposer des variantes, notamment en choisissant d'autres matériaux que ceux décrit, sans pour autant sortir du cadre de l'invention, pour autant qu'elle demeure celle définie dans les revendications.

## Revendications

1. Lame d'essuie-glace comportant une partie dorsale (1,11) et une lèvre racleuse (2,12) reliées par une charnière (8) permettant un débattement de la lèvre racleuse par rapport à une position médiane, la lame étant constituée d'au moins deux profilés assemblés (1,2 ; 11,12) caractérisé en ce que l'un au moins des profilés présentant un moyen de raccordement (7',20) à une extrémité de la charnière (8) et en ce que la charnière est réalisée en un matériau d'une dureté supérieure au matériau d'au moins un profilé (1,2 ; 11,12).

2. Lame d'essuie-glace selon la revendication 1, caractérisée en ce que l'autre des profilés présente un moyen de raccordement (7',20) pour une autre extrémité de la charnière (8).

3. Lame d'essuie-glace selon la revendication 2, caractérisée en ce que la charnière (8) est réalisée sous la forme d'un troisième profilé (13) coopérant avec les profilés (1,2 ; 11,12).

4. Lame d'essuie-glace selon l'une des revendications précédentes caractérisée en ce que les profilés (1,2 ; 11,12 ; 13) sont coextrudés.

5. Lame d'essuie-glace selon l'une des revendications précédentes caractérisée en ce que les moyens de raccordement consistent en une rainure (7',20).

6. Lame d'essuie-glace selon la revendication 3, caractérisée en ce que le troisième profilé (13) présente, en section, une forme de I.

7. Lame d'essuie-glace selon l'une des revendications précédentes, caractérisée en ce que les rainures (7',20) présentent, en section, une forme complémentaire à celle de l'extrémité de la charnière (8) qu'il reçoit.

8. Lame d'essuie-glace selon l'une quelconque des revendications précédentes, caractérisée en ce qu'un profilé (1, 11) présente une partie dorsale (4) comportant une paire de rainures longitudinales (5,6) et prolongé à son bord inférieur par une charnière (7,8).

9. Lame d'essuie-glace selon l'une quelconque des revendications précédentes caractérisée en ce que les profilés sont choisis parmi les suivants:
- 2 grades de santoprène coextrudés ;
- Premier profilé (1, 11) en Santoprène dur et deuxième profilé (2, 13) en Vyram souple coextrudés ;
- Premier profilé en PA et deuxième profilé en Peba souple coextrudés ;
- Premier profilé en EPDM dur et deuxième profilé en EPDM souple coextrudés et covulcanisés en continu ;
- Premier profilé en Peba dur et deuxième profilé en PVC-nitrile souple coextrudés et covulcanisés en continu.

10. Balai d'essuie-glace, notamment pour véhicules automobiles, caractérisé en ce qu'il comporte une lame d'essuie-glace selon l'une des revendications précédentes.

## Claims

1. A screen wiper strip comprising a dorsal portion (1, 11) and a wiping lip (2, 12) which are joined together by a hinge (8) which enables the wiping lip to be displaced with respect to a median position, the strip consisting of at least two profiled members (1, 2; 11, 12) assembled together, characterised in that at least one of the profiled members has means (7', 20) for connection to an end of the hinge (8), and in that the hinge is made of a material having a hardness greater than that of the material of at least one profiled member (1, 2: 11, 12).

2. A screen wiper strip according to Claim 1, characterised in that the other profiled member has a means (7', 20) for connection to another end of the hinge (8).

3. A screen wiper strip according to Claim 2, characterised in that the hinge (8) is made in the form of a third profiled element (13) cooperating with the profiled elements (1, 2; 11, 12).

4. A screen wiper strip according to one of the preceding Claims, characterised in that the profiled members (1, 2; 11, 12; 13) are co-extruded.

5. A screen wiper strip according to one of the preceding Claims, characterised in that the connecting means consist of a groove (7', 20).

6. A screen wiper strip according to Claim 3, characterised in that the third profiled element (13) has an I-shaped form in cross section.

7. A screen wiper strip according to one of the preceding Claims, characterised in that the grooves (7', 20) have, in cross section, a form complementary to that of the end of the hinge (8) received therein.

8. A screen wiper strip according to any one of the preceding Claims, characterised in that one profiled element (1, 11) has a dorsal portion (4) having a pair of longitudinal grooves (5, 6) and extended by a hinge (7, 8) on its lower side.

9. A screen wiper strip according to any one of the preceding Claims, characterised in that the profiled members are selected from the following:
- two grades of Santoprene, co-extruded;
- the first profiled element (1, 11) in hard Santoprene and the second profiled member (2, 13) in soft Vyram, co-extruded;
- the first profiled member in PA and the second profiled member in soft Peba, co-extruded;
- the first profiled member in hard EPDM and the second profiled member in soft EPDM, co-extruded and continuously co-vulcanised;
- the first profiled member in hard Peba and the second profiled member in soft PVC-nitryl, co-extruded and continuously co-vulcanised.

10. A screen wiper blade, especially for motor vehicles, characterised in that it includes a screen wiping strip in accordance with one of the preceding Claims.

## Patentansprüche

1. Scheibenwischerblatt, umfassend einen Rückenteil (1, 11) und eine Wischlippe (2, 12), die durch ein Gelenkband (8) miteinander verbunden sind, das eine Auslenkung der Wischlippe im Verhältnis zu einer Mittelposition ermöglicht, wobei das Scheibenwischerblatt aus mindestens zwei zusammengefügten Profilen (1, 2; 11, 12) besteht, **dadurch gekennzeichnet,** daß mindestens eines der Profile ein Anschlußmittel (7', 20) für den Anschluß an ein Ende des Gelenkbands (8) aufweist und daß das Gelenkband aus einem Material mit größerer Härte als das Material mindestens eines Profils (1, 2; 11, 12) ausgeführt ist.

2. Scheibenwischerblatt nach Anspruch 1,**dadurch gekennzeichnet,** daß das andere der Profile ein Anschlußmittel (7', 20) für ein anderes Ende des Gelenkbands (8) aufweist.

3. Scheibenwischerblatt nach Anspruch 2,**dadurch gekennzeichnet,** daß das Gelenkband (8) in Form eines dritten Profils (13) ausgeführt ist, das mit den Profilen (1, 2; 11, 12) zusammenwirkt.

4. Scheibenwischerblatt nach einem der vorangehenden Ansprüche , **dadurch gekennzeichnet,** daß die Profile (1, 2; 11, 12; 13) koextrudiert sind.

5. Scheibenwischerblatt nach einem der vorangehenden Ansprüche , **dadurch gekennzeichnet,** daß die Anschlußmittel aus einer Nut (7', 20) bestehen.

6. Scheibenwischerblatt nach Anspruch 3,**dadurch gekennzeichnet,** daß das dritte Profil (13) im Querschnitt eine I-Form aufweist.

7. Scheibenwischerblatt nach einem der vorangehenden Ansprüche , **dadurch gekennzeichnet,** daß die Nuten (7', 20) im Querschnitt eine Form aufweisen, die formschlüssig mit derjenigen des Endes des Gelenkbands (8) ausgeführt ist, das darin eingesetzt ist.

8. Scheibenwischerblatt nach einem der vorangehenden Ansprüche , **dadurch gekennzeichnet,** daß ein Profil (1, 11) ein Rückenteil (4) aufweist, der ein Paar Längsnuten (5, 6) enthält und an seiner Unterkante durch ein Gelenkband (7, 8) verlängert wird.

9. Scheibenwischerblatt nach einem der vorangehenden Ansprüche , **dadurch gekennzeichnet,** daß die Profile aus den folgenden Materialien ausgewählt werden:
- 2 koextrudierte Santopren-Grade,
- erstes Profil (1, 11) aus hartem Santopren und zweites Profil (2, 13) aus biegsamem Vyram, koextrudiert,
- erstes Profil aus PA und zweites Profil aus biegsamem PEBA, koextrudiert,
- erstes Profil aus hartem EPDM und zweites Profil aus biegsamem EPDM, koextrudiert und im Durchlaufverfahren kovulkanisiert,
- erstes Profil aus hartem PEBA und zweites Profil aus biegsamem Nitril-PVC, koextrudiert und im Durchlaufverfahren kovulkanisiert.

10. Scheibenwischer, insbesondere für Kraftfahrzeuge, **dadurch gekennzeichnet,** daß er ein Scheibenwischerblatt nach einem der vorangehenden Ansprüche umfaßt.
